# EUROPÄISCHE PATENTSCHRIFT

(11) **EP 2 915 785 B1**
(45) Veröffentlichungstag und Bekanntmachung des Hinweises auf die Patenterteilung: **01.12.2021**
(21) Anmeldenummer: 15154515.9
(22) Anmeldetag: 10.02.2015
(51) Int. Cl.: C03C 27/00, C03C 27/02, C04B 37/04, H01L 21/20, C03B 23/20

(54) **Verfahren zum laserinduzierten Fügen eines glasartigen Fügepartners mit einem zweiten Fügepartner mithilfe ultrakurzer Laserpulse**
Method for laser-induced joining of a vitreous joining partner with another joining partner using ultrashort laser pulses
Procédé d'assemblage induit par laser d'une partie en verre à assembler à une autre partie à assembler à l'aide d'impulsion laser ultracourte

(30) Priorität: 03.03.2014 DE 102014203845
(43) Veröffentlichungstag der Anmeldung: 09.09.2015
(73) Patentinhaber: BLZ BAYERISCHES LASERZENTRUM GEMEINNÜTZIGE FORSCHUNGSGES. MBH, 91052 Erlangen (DE); Friedrich-Alexander-Universität Erlangen-Nürnberg, 91054 Erlangen (DE)
(72) Erfinder: Cvecek, Kristian, 91054 Erlangen (DE); Schmidt, Michael, 91054 Erlangen (DE); Roth, Stephan, 90537 Feucht (DE); Bechtold, Peter, 91054 Buckenhof (DE); Nagulin, Konstantin Yuryevich, 420075 Kazan (RU)
(74) Vertreter: Hübner, Gerd

(56) Entgegenhaltungen:
- US-A1- 2010 047 587
- I. MIYAMOTO, K. CVECEK, Y. OKAMOTO, M. SCHMIDT: "Internal modification of glass by ultrashort laser pulse and its application to microwelding", APPL. PHYS. A, Bd. 114, 6. Dezember 2013 (2013-12-06), Seiten 187-208, XP035330851, DOI: 10.1007/s00339-013-8115-3
- None

## Beschreibung

Die Erfindung betrifft ein Verfahren zum laserinduzierten Fügen eines ersten, glasartigen Fügepartners mit einem zweiten Fügepartner mithilfe ultrakurzer Laserpulse mit den im Oberbegriff des Patentanspruches 1 angegebenen Verfahrensschritten.

Bevor auf die Erfindung näher eingegangen wird, soll deren Hintergrund und die sich daraus ergebende Problematik des Standes der Technik näher erläutert werden.

So benötigen viele Schweißverfahren, die bei unterschiedlichsten Materialien, wie beispielsweise Thermoplasten mit glasartigen Fügepartnern, Verwendung finden, einen direkten Kontakt der Fügepartner. Ist dieser nicht gewährleistet, droht - falls überhaupt eine Verbindung erzielt werden kann - eine rissbehaftete Schweißnaht. Am Beispiel des Glasschweißens ist dies z.B. näher erläutert im Fachartikel von K. Cvecek, I. Miyamoto, J. Strauss, M. Wolf, T. Frick, M. Schmidt, "Sample preparation method for glass welding by ultrashort laser pulses yields higher seam strength" in Appl. Opt., 50, (2011), 1941. Die Theorie hierzu, die derzeit noch in Entwicklung ist, setzt daran an, dass sich im Spalt zwischen den beiden Fügepartnern die Schmelze nach außen entspannen kann, was beim Erstarren zu Rissen führt. Ist kein Raum vorhanden, wohin sich die Schmelze entspannen könnte, ist der Aufheizprozess und Erstarrungsprozess im Wesentlichen reversibel, es gibt dann also keine Risse. Im Stand der Technik, nämlich etwa dem Fachartikel von T. Tamaki, W. Watanabe, K. Itoh, "Laser microwelding of transparent materials by a localized heat accumulation effect using a femtosecond fiber laser at 1558 nm" in Opt. Exp., Vol.14, No. 22,

Oct. 2006 oder der JP 2005 066629 A sind zwar Möglichkeiten angegeben, den Spalt künstlich, z.B. durch Zusammendrücken, zu verringern, dies verspannt jedoch die Fügepartner, so dass die Schweißnaht später unter Belastung steht.

In einigen Fällen, besonders bei Verbindungen spröder Materialien, wie z.B. Glas-Glas, Glas-Silizium oder Glas-Metall, ist es daher erforderlich, dass ein sogenannter optischer Kontakt zwischen den Fügepartnern erzielt wird. Der optische Kontakt ist dadurch charakterisiert, dass der durchschnittliche Abstand der Fügepartner i.d.R. ≤ 20 nm beträgt und die Fügepartner aneinander durch Van-der-Waals-Kräfte haften. Optische Kontaktierung ist daher derzeit konkurrenzlos, was das Erzielen von rissfreien Schweißungen in Glas anbelangt.

Optische Kontaktierung ist aber nur aufwendig zu realisieren:
- Es wird eine hohe Oberflächengüte der Gläser benötigt, nämlich die Qualitätsstufe P3. Diese wird durch ein nachträgliches Polieren der Gläser erzielt, was die Kosten für die Herstellung der Gläser erheblich erhöht.
- Die Reinheit der Glas-Oberflächen muss bis zur Kontaktierung gewährleistet bleiben bzw. müssen die Gläser vor der Kontaktierung gründlich gereinigt werden, was den Aufwand zusätzlich erhöht.
- Der eigentliche Prozess der Herstellung des optischen Kontaktes ist von verschiedenen, nicht direkt kontrollierbaren Einflüssen abhängig, so dass selbst industrielle Kontaktierungsverfahren mit dafür ausgestatteten Anlagen den optischen Kontakt oft nicht perfekt realisieren können.

Ein wichtiger Aspekt des Ultrakurzpuls-(UKP-)Glasschweißens ist der hermetische Einschluss eines Gases oder Vakuums in einer Glas-Kavität z.B. bei der MEMS-Herstellung. In einem solchen Fall muss die Kontaktierungsanlage direkt in einer solchen Umgebung funktionieren, da die Diffusionsraten durch den optischen Kontakt i.d.R. zu niedrig sind, als dass sich die gewünschte Umgebung in der Kavität einstellt. Eine Portierung einer Kontaktierungsanlage in beispielsweise eine Vakuum-Umgebung oder in eine Umgebung gefüllt mit radioaktiven oder stark chemisch aggressiven Gasen wird als sehr aufwendig erachtet.

Sobald die Plättchen kontaktiert sind, lassen sie sich ferner nicht mehr verschieben. Eine hochpräzise Ausrichtung von Fügepartnern im optischen Kontakt daher nicht möglich.

Die Problematik der Anbindung der Fügepartner vor dem Schweißen ist jedoch auch bei anderen Materialien vorhanden, so z.B. auch bei transparenten oder teiltransparenten schmelzbaren Kunststoffen.

Auch im Fachartikel von I. Miyamoto, K. Cvecek, , Y. Okamoto, M. Schmidt, "Internal modification of glass by ultrashort laser pulse and its application to microwelding" wird ein Verschweißen von Fügepartnern unter optischen Kontakt der beiden Bauteile empfohlen. Dabei werden durch interne Modifikationsprozesse im Glas aufgrund Einstrahlung von Ultrakurzpuls-Laserstrahlung und damit verbundene nichtlineare Effekte tropfenförmige Plasmastrukturen und diese umgebende elliptische Strukturen im Fügebereich zum Verschweißen erzeugt.

Die US 2010/0047587 A1 offenbart ein Verfahren zum Verbinden zweier Fügepartner, indem in deren einander zugewandte Grenzflächen ultrakurze Laserpulse eingestrahlt und aufgrund nichtlinearer Absorptionsphänomene eine die Grenzflächen übergreifende Multi-Filament-Zone gebildet werden. Dabei kann davon ausgegangen werden, dass dafür ebenfalls ein optischer Kontakt zwischen den beiden Fügepartnern vorzusehen ist, da ansonsten ein Glasschmelze-Austritt in den Spalt mit entsprechender Rissbildung zu befürchten steht.

Die US 2005/0199599 A1 stellt den nächstkommenden Stand der Technik dar und beschreibt dem Grunde nach ein Verfahren, mit dessen Hilfe ein transparenter bzw. teiltransparenter glasartiger Fügepartnern an einen anderen, auch materialfremden Fügepartner über Van-der-Waals-Kräfte auch über einen Spalt hinweg angebunden werden kann, ohne dass zuvor beispielsweise ein optischer Kontakt erzeugt werden muss.

Ultrakurze Laserpulse werden in einen transparenten oder teiltransparenten glasartigen Fügepartner fokussiert. Das Material im oder nahe des Fokus wird durch nichtlineare Ionisationsprozesse erwärmt und geschmolzen. Die Pulsrepetitionsrate muss ausreichend hoch sein, um zwischen einzelnen Laserpulsen so hohe Temperaturen zu erreichen, dass die Schmelzezone nicht erstarrt. Der Prozess des Aufheizens ist dabei auf einen engen Raumbereich zu beschränken.

Der Bereich direkt um den Fokus wird auf hohe Temperaturen geheizt, z.T. weit über den Schmelzpunkt hinaus. Im Zusammenhang mit dem Werkstoff Glas offenbart der Fachartikel von I. Miyamoto, K. Cvecek, M. Schmidt: "Evaluation of nonlinear absorptivity in internal modification of bulk glass by ultrashort laser pulses" in Opt. Exp., 19, (2011), 10714 hierzu nähere Hintergrundinformationen. Durch Wärmeleitungseffekte, wird das benachbarte Material ebenfalls erwärmt und z.T. aufgeschmolzen. In direkter Nachbarschaft der Schmelze wird die Viskosität des Materials erheblich reduziert, ohne selbst geschmolzen zu sein. Diese Zone wird im weiteren Verlauf dieses Anmeldungstextes als niedrigviskose Zone - kurz "NVZ" - bezeichnet. In der vorgenannten Druckschrift US 2005/0199599 A1 ist diesem NVZ als "swollen region" um den geschmolzenen Fokusbereich herum dargestellt.

Wie weiterhin in diesem Dokument dem Grunde nach offenbart ist, wird der Fokus des Laserstrahls dabei so in einem der Fügepartner positioniert, dass die zum Fügen bestimmte Oberfläche sich exakt in der nicht geschmolzenen, aber niedrigviskosen Zone befindet - bei Glas typischerweise wenige µm um die Schmelzezone herum. Die Fokussierung (NA), Laserleistung, Vorschubgeschwindigkeit, Repetitionsrate, Pulsenergie beeinflussen stark die Form der Schmelze und damit Größe und Form der NVZ. Durch die thermische Ausdehnung der heißen Schmelzezone wird auf die NVZ ein Druck ausgeübt, der zu einer Aufwölbung der NVZ führt. Durch die Expansion der NVZ kann ein geringer Spalt - bei Glas ca. < 1 µm - zum anderen Fügepartner hin überbrückt werden. Die Oberflächenspannung der NVZ verhindert dabei, dass flüssiges Material in den Spalt entweicht.

Bei entsprechender weiterer Ausdehnung der NVZ kann sich die Oberfläche der NVZ aufgrund ihrer geringen Viskosität an die Oberflächenkontur des gegenüberliegenden Fügepartners anpassen und andrücken. Sobald ein Abstand < 100 nm zwischen NVZ und dem anderen Fügepartner erzielt wird, wirken zusätzlich Van-der-Waals-Kräfte, die eine anziehende Kraft zwischen der NVZ und dem anderen Fügepartner ausüben. Ist die Temperatur der NVZ hoch genug, kann zudem im Fall gleicher Materialien der Fügepartner zusätzlich ein substantieller Anteil an Molekülen von der NVZ in den anderen Fügepartner diffundieren und damit die Verbindung weiter festigen.

Im Zuge der Entwicklung der Erfindung wurde nun die Erkenntnis gewonnen, dass die Verbindung zwischen den beiden Fügepartner und deren Bindungsstabilität durch eine möglichst große Volumenvergrößerung der NVZ günstig beeinflusst werden kann.

Davon ausgehend liegt der Erfindung die Aufgabe zu Grunde, das gattungsgemäße Verfahren so weiterzubilden, dass die Aufwölbung der NVZ möglichst effektiv unterstützt wird.

Diese Aufgabe wird durch die im Kennzeichnungsteil des Patentanspruches 1 angegebenen Verfahrensmerkmale gelöst, indem ein fokussierter Ultrakurzpuls-Laserstrahl in die Schmelzezone eingestrahlt wird, dessen Bestrahlungsparameter so gewählt sind, dass aufgrund der die Schmelzezone erzeugenden, laserinduzierten Ionisationseffekte zusätzlich in der Schmelzezone eine oder mehrere Gasblasen erzeugt werden, deren Volumenvergrößerung die Aufwölbung der Oberfläche des glasartigen Fügepartners und die damit verbundene Reduzierung des Spaltes zwischen den Fügepartnern unterstützt.

Eine besonders effektive Ausbildung des erfindungsgemäßen Verfahrens besteht in der Ausnutzung eines an sich in der Literatur grundsätzlich beschriebenen Mitführungseffektes für die Gasblase(n), indem durch eine Vorschubbewegung des Fokus des UKP- Laserstrahls innerhalb des glasartigen Fügepartners eine Gasblase innerhalb der Schmelzezone aktiv transportiert wird. Dieser Mitführungseffekt beruht auf der Oberflächenspannung der Gasblase in der Schmelzezone und wird in der Beschreibung des Ausführungsbeispiels zur Vermeidung von Wiederholungen näher erläutert. Damit kann die Erzeugung und Führung der Gasblasen gezielt - insbesondere auch entgegen der auf sie wirkenden Auftriebskraft - gesteuert werden. Dadurch ist auch das Fügen von anderen als der in Richtung der Auftriebskraft liegenden Seiten des glasartigen, NVZ-bildenden, Gasblasen-behafteten Fügepartners möglich, wie beispielsweise die Generierung einer Aufwölbung an der Unterseite des in Bezug zur Schwerkraft oben liegenden Fügepartners. Insgesamt ist das erfindungsgemäße Verfahren damit in Richtung Variabilität optimiert.

Die Aufwölbung der NVZ wird durch diese Gasblasenbildung aufgrund von laserinduzierten Vorgängen im lasergeschmolzenen Teil des zu fügenden Materials effektiv verstärkt, da die Gasblasen das Volumen der laserbestrahlten Zone stark vergrößern. Die Gasblasenbildung wird bei geeignet gewählten Laserparametern in vielen Glassorten beobachtet, bevorzugt in Quarzglas, Kalk-Natron-Glas, oder Borosilikatgläsern (BF33, D263). Sie kann allerdings grundsätzlich für jedes Material erwartet werden, das über laserinduzierte Ionisationseffekte aufgeschmolzen wird. Die Blasenerzeugung kann durch die Bearbeitungsparameter optimiert werden, was grundsätzlich bereits in wissenschaftlichen Veröffentlichungen, wie z.B. in Cvecek et. al. "Bubble formation in glasses generated by ultra short laser pulses", Proceedings of LAMP2013, Niigata, Japan, 2013 - in Folgenden kurz "Cvecek et al." - und weiteren dort angegebenen Literaturstellen beschrieben ist.

Ein weiterer Vorteil des erfindungsgemäßen Verfahrens liegt grundsätzlich darin, dass die Ausdehnung der Schmelzezone und damit auch die Aufwölbung der NVZ aufgrund der eingeschlossenen Gasblase(n) irreversibel ist. Wurde ein Fügepartner mit Hilfe der gasblasenbehafteten NVZ kontaktiert, so ist davon auszugehen, dass neben der Fügefläche ein gewisser Abstand zwischen den Fügepartnern vorliegt. Dies ist von Vorteil gegenüber einer reversiblen, da thermisch bedingten Aufwölbung, wie sie in der US 2005/0199599 A1 oder auch US 2010/0084384 A1 offenbart ist, da erfindungsgemäß auch Fügepartner mit einer Gesamtoberflächenrauheit im Bereich von 0,5 bis 1 µm gefügt werden können.

In den abhängigen Ansprüchen sind bevorzugte Weiterbildungen des erfindungsgemäßen Verfahrens angegeben. So kann die Rolle des die Gasblasenbildung hervorrufenden UKP-Laserstrahls durch den fokussierten Bearbeitungsstrahl selbst übernommen werden. Damit lässt sich das erfindungsgemäße Verfahren in anlagentechnisch vereinfachter Weise realisieren.

In einer Alternative dazu wird ein vom Bearbeitungsstrahl unabhängiger, gesonderter UKP-Laserstrahl eingesetzt, der dann in seinen Parametern spezifisch an seine Aufgabe der Gasblasenbildung und -beeinflussung angepasst sein kann.

Gemäß einer weiteren bevorzugten Ausführungsform des erfindungsgemäßen Verfahrens können die Fügepartner mit ihrer Fügezone derart angeordnet werden, dass die auf jede Gasblase in der Schmelzezone wirkende Auftriebskraft in zur Fügezone hin gerichtet ist. Da damit die Gasblase in Richtung der Fügezone beaufschlagt und damit auch in diese Richtung lokal verschoben wird, wird die Aufwölbungstendenz der NVZ und damit deren Fähigkeit zur Spaltüberbrückung zwischen den Fügepartnern weiter verbessert.

Wie bereits erwähnt, ist die Aufwölbung der Schmelzezone aufgrund der Gasblasen in der Schmelzezone irreversibel. Es verbleibt daher ein Spalt zwischen den Fügepartnern außerhalb der Fügefläche. Bei Bedarf kann dieser Spalt verringert werden, indem unter Zuhilfenahme dieses Mitführungseffekts jede einzelne Blase nach dem ersten Fügeprozess aus der ursprünglichen Fügezone entfernt wird und z. B. weiter in das Innere des glasartigen Materials, d.h. weiter weg von der Fügefläche, platziert wird.

Gemäß einer weiteren bevorzugten Verfahrensvariante kann der vorgenannte Mitführungseffekt auf die Gasblasen durch die Laserparameter, insbesondere Laserleistung, Pulsenergie, Vorschubgeschwindigkeit, Pulsdauer und Repetitionsrate des UKP-Laserstrahls gesteuert werden. Besonders ist in diesem Zusammenhang zu erwähnen, dass damit das Ablösen der Gasblase vom führenden UKP-Laserstrahl und damit die Positionierung der Gasblase innerhalb der Schmelzezone gezielt vorgenommen werden kann. Dies kann darauf beruhen, durch eine gezielte Parameterwahl der Laserdaten die Gasblase aufgrund des Reibungswiderstandes innerhalb der Schmelzezone nicht mehr durch den Mitführungseffekt transportiert wird und am gewünschten Ort innerhalb der Schmelzezone stecken bleibt. In Cvecek et al. ist dieser Effekt anhand der dort erläuterten periodischen Blasenbildung geschrieben.

Gemäß einer weiteren bevorzugten Ausführungsform der Erfindung können gleichzeitig mehrere UKP-Laserstrahlen zum gezielten Transport einer Gasblase insbesondere entgegen deren Auftriebskraft innerhalb einer Schmelzezone verwendet werden. Durch diese Verwendung von mehreren Lasern kann das Temperaturfeld um die Gasblase so eingestellt werden, dass der Mitführungseffekt größer wird und damit z.B. der Einfluss des Auftriebs vergleichsweise viel geringer wird. Da die Richtung der zusätzlichen Strahlen frei gewählt werden kann, lässt sich die Form der Schmelzzone und damit die Ausprägung der NVZ sowie des Temperaturfeldes für den Mitführungseffekt gezielt im glasartigen Material einstellen. Die Ausnutzung eines Mitführungseffekts entgegen der Auftriebskraft ist so verstärkt zu unterstützen.

Eine Weiterbildung des erfindungsgemäßen Verfahrens sieht vor, insbesondere zur Herstellung von punktförmigen Fügezonen zwischen den beiden Fügepartnern eine Gasblase innerhalb des glasartigen Fügepartners zu erzeugen und mit Hilfe des laserbasierten, durch die Oberflächenspannung der Gasblase bedingten Mitführungseffektes zum Ort der zu erstellenden punktförmigen Fügezone zu transportieren. In dieser Verfahrensvariante ist gerade die Kugelform der Gasblase besonders geeignet für die Herstellung von Punktschweißungen.

Zur gezielten Führung der Gasblase(n) kann der Fokus des mindestens einen Bearbeitungsstrahls des UKP-Lasers durch entsprechende Strahlformungsmittel geformt werden, wie sie beispielsweise zur Steuerung der dreidimensionalen Intensitätsverteilung im Fokus dienen. Zu nennen sind hier beispielsweise eine adaptive Optik oder ein räumlicher Licht-Modulator - in der Fachsprache als "spatial light modulator" bezeichnet -, wodurch der Fokus sphärisch, abgeplattet oder longitudinal gedehnt konfigurierbar ist. Dadurch kann die Form der Schmelzezone und die Wirkung der NVZ zum Fügen genauso verbessert werden, wie die Führung der Gasblasen durch gezielt eingestellte Temperaturverläufe.

Neben den bereits oben erwähnten, bevorzugten glasartigen Fügepartnern kann der zweite, artfremden Fügepartner beispielsweise aus Metall, einem Halbleiter, einem Kristall oder Kunststoff bestehen, der folgende Eigenschaften aufweist:
- der Kontaktwinkel der niedrigviskosen Zone zum zweiten Fügepartners ist kleiner 90°, und
- der Schmelzpunkt des zweiten Fügepartners liegt über der Minimal-Temperatur der niedrigviskosen Zone, die notwendig ist, eine Aufwölbung der Oberfläche des glasartigen Fügepartners während des Fügeprozesses zu bewirken.

Weitere Merkmale, Einzelheiten und Vorteile des erfindungsgemäßen Verfahrens ergeben sich aus der nachfolgenden Beschreibung anhand der beigefügten Zeichnungen. Es zeigen:
- Fig. 1: eine schematische Darstellung einer Laseranordnung mit Fügepartnern zum laserinduzierten Fügen,
- Fig. 2: eine schematische Illustration einer Gasblase mit den für den Mitführungseffekt verantwortlichen, temperaturabhängigen Oberflächenspannungs-Verhältnissen,
- Fig. 3: eine realitätsangelehnte Schnittdarstellung eines glasartigen Fügepartners mit einer durch laserinduzierte Ionisationseffekte erzeugten, verschobenen Gasblase,
- Fig. 4: eine höchst schematische Schnittdarstellung zweier Fügepartner in Bereich ihrer Fügeebene, und
- Fig. 5: einen schematischen, quaderförmigen Ausschnitt aus den beiden Fügepartnern 5, 6 unter Einbeziehung der Fügeebene FE.

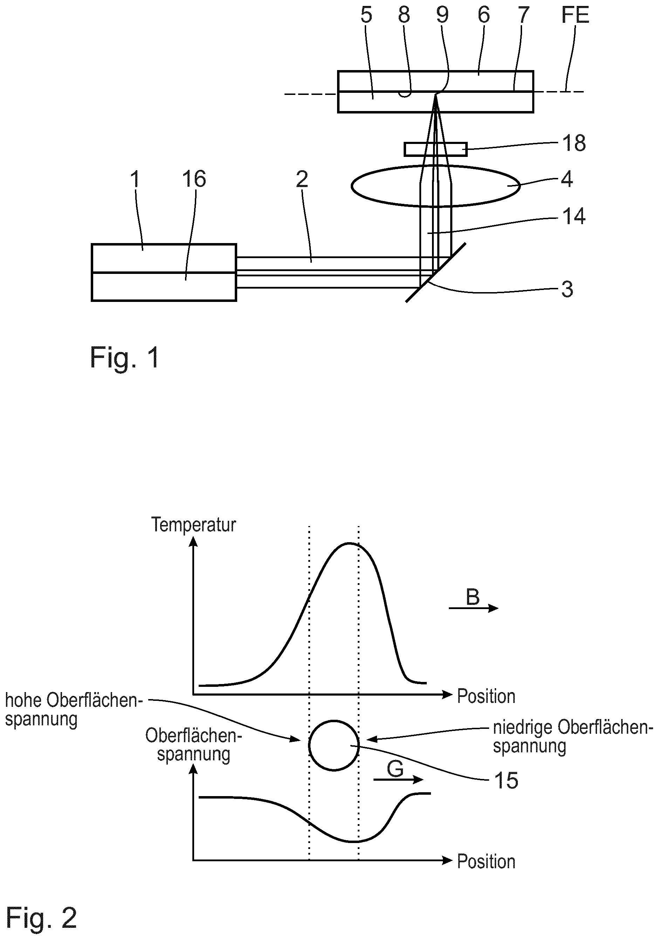

Wie aus Fig. 1 deutlich wird, weist eine für das erfindungsgemäße Verfahren zum laserinduzierten Fügen geeignete Laseranordnung einen ersten Ultrakurzpuls-Laser 1 auf, der einen entsprechenden Laser-Bearbeitungsstrahl 2 erzeugt. Es handelt sich dabei beispielsweise um einen Nd:YVO₄-Laser (modemgekoppelt), wobei die Pulse in ihrer Halbwertbreite eine Dauer von 10 ps bei 1064 nm Wellenlänge aufweisen. Die Pulswiederholungsrate ist einstellbar und liegt für Einzelpulse bei maximal 8,2 MHz. Die nominelle Durchschnittsleistung kann bis zu 50 W betragen.

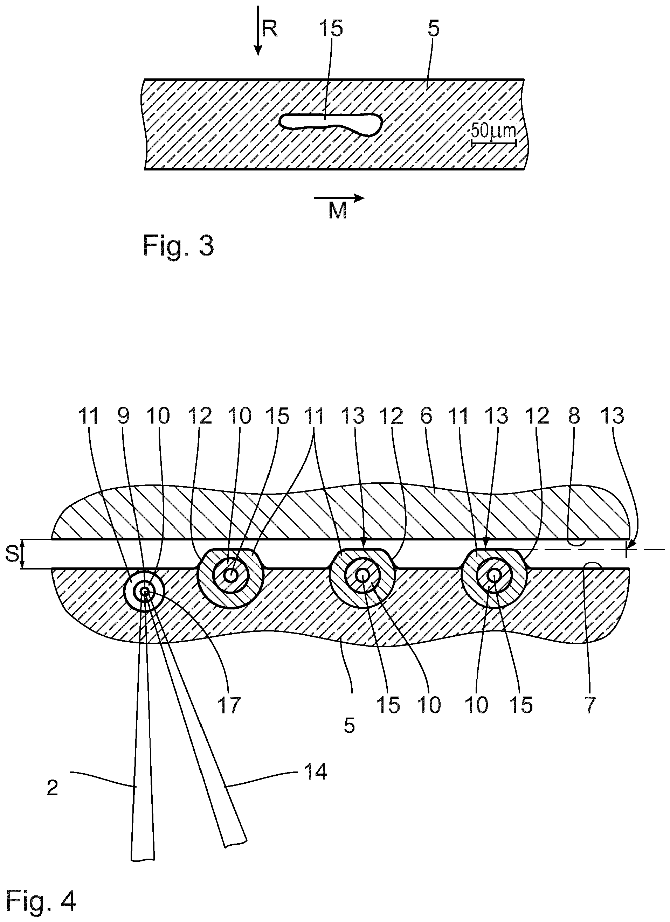

Der gepulste Laser-Bearbeitungsstrahl 2 wird über einen Umlenkspiegel 3 und eine Fokussieroptik 4 von unten auf die beiden Fügepartner 5, 6 geführt. Die beiden Fügepartner sind dabei mit ihren der Fügeebene FE zugewandten Fügeflächen 7, 8 (Fig. 4) aufeinander positioniert, wobei durch ihre (nicht dargestellte) Oberflächenrauheit ein Spalt S zwischen ihren zu fügenden Oberflächen 7, 8 vorhanden ist. Der eine, in Fig. 1 und 4 untere Fügepartner 5 besteht dabei aus einem glasartigen Material, wie beispielsweise Quarzglas, Kalk-Natron-Glas oder Borosilikat-Glas.

Der obere Fügepartner 6 ist gegenüber dem glasartigen Fügepartner 5 artfremd und kann beispielsweise aus einem Metall, einem Halbleiter, einem Kristall oder Kunststoff bestehen.

Ohne besondere Behandlung der Fügeflächen 7, 8 der Fügepartner 5, 6, wie beispielsweise ein Polieren der Fügefläche 7 des glasartigen Fügepartners 5 ist das Maß des Spaltes S deutlich größer als 20 nm, welches Maß den durchschnittlichen Abstand der Fügepartner zur Herstellung des sogenannten optischen Kontaktes darstellt. Ab einem Spaltmaß von kleiner 20 nm können die Fügepartner 5, 6 durch Van-der-Waals-Kräfte haften, was zur Erzielung von rissfreien Schweißungen im Glas eine sehr gute Basis bildet.

Um ein Fügen solcher Art zu ermöglichen, wird nun der Laser-Bearbeitungsstrahl 2 so in den glasartigen Fügepartner 5 eingestrahlt, dass sein Fokus 9 nahe der Fügeebene FE angeordnet ist. Aufgrund der eingestrahlten Energie wird mittels laserinduzierter Ionisationseffekte eine Schmelzezone 10 und eine diese umgebende Niedrigviskose Zone - im Folgenden "NVZ" - 11 gebildet, was anhand von Fig. 4 erkennbar ist. Die räumliche Ausdehnung der NVZ reicht aufgrund der Wärmeleitung bis an die Oberfläche des glasartigen Fügepartners 5 und die thermische Ausdehnung der Schmelzezone 10 führt zur Ausbildung einer Aufwölbung 12 an der Fügefläche 7 des Fügepartners 5 im Bereich des Fokus 9 des Bearbeitungsstrahls 2. Dadurch wird bereits der Spalt S zum zweiten, artfremden Fügepartner 6 hin reduziert, wobei je nach den gewählten Verhältnissen es bereits möglich ist, das Spaltmaß S im Bereich dieser Aufwölbung 12 auf ein Maß zu drücken, dass ein optischer Kontakt zwischen den Fügepartnern 5, 6 in der dadurch gebildeten Fügezone 13 hergestellt und entsprechend die Fügepartner 5, 6 in der Fügezone 13 aufgrund der dort wirkenden Van-der-Waals-Kräfte anhaften.

Um diesen grundsätzlichen Fügeprozess zu unterstützen, kann mithilfe des Bearbeitungsstrahls 2 oder - wie anhand von Fig. 1 und 3 im Folgenden noch näher erläutert wird - mithilfe eines zweiten Bearbeitungsstrahls 14 in der Schmelzezone 10 die Bildung einer (oder auch mehrerer) Gasblase(n) 15 hervorgerufen werden. Dazu ist ein zweiter UKP-Laser 16, der dem UKP-Laser 1 entsprechende Spezifikationen aufweisen kann, vorgesehen, dessen Bearbeitungsstrahl 14 ebenfalls über den Umlenkspiegel 3 und die Fokussieroptik 4 in den glasartigen Fügepartner 5 in die Schmelzezone 10 eingestrahlt wird. Zur Modellierung des Fokus 17 dieses zweiten Bearbeitungsstrahls 14 kann eine in Fig. 1 angedeutete Strahlformungseinheit 18 beispielsweise in Form einer adaptiven Optik oder eines räumlichen LichtModulators verwendet werden. Dadurch kann der Laserfokus in seiner Intensitätsverteilung dreidimensional geformt werden, was Einfluss auf den im Weiteren noch näher erläuterten Mitführungseffekt auf die Gasblasen 15 hat.

Typische Spezifikationen für die Laser-Bearbeitungsstrahlen 2, 14 sind beispielsweise eine Pulsenergie der Größenordnung von 0,7 bis 5 µJ, vorzugsweise 2 µJ, eine Wiederholrate von 100 bis 4 MHz, vorzugsweise 1 MHz, eine Vorschubgeschwindigkeit von 10 mm/s und eine numerische Apertur der Fokussieroptik 4 von 0,3 bis 0,9, vorzugsweise 0,8. Damit lassen sich in einer Schmelzezone 10, die in der Praxis in der Regel tropfenförmig mit einer Breite von beispielsweise 40 µm und einer Höhe von beispielsweise 70 µm ausgebildet ist, Gasblasen mit einem Durchmesser in der Größenordnung von wenigen Mikrometer bis größenordnungsmäßig 10 µm erzielen. Diese durch laserinduzierte Ionisationseffekte erzeugten Gasblasen in den Schmelzezonen 10 führen zu einer weiteren Volumenvergrößerung der Aufwölbungen 12, so dass die Reduzierung des Spaltes S zwischen den Fügepartnern 5, 6 damit wirkungsvoll unterstützt und das Erreichen eines optischen Kontaktes zwischen den beiden Fügepartnern 5,6 erleichtert werden.

Bei den in Fig. 1 und 4 gezeigten Anordnungen der Fügepartner ist der glasartige Fügepartner 5 unten dargestellt, so dass die Auftriebskraft auf die Gasblasen 15 nach oben in Richtung zu dem darüber angeordneten zweiten, artfremden Fügepartner 6 wirkt, wodurch die Aufwölbungstendenz in Richtung zu diesem zweiten Fügepartner 6 unterstützt wird.

Werden die Anordnungen gemäß Fig. 1 und Fig. 4 "auf den Kopf gestellt", so dass die Laser-Bearbeitungsstrahlen 2, 14 in den oben angeordneten glasartigen Fügepartner eingestrahlt werden, so ist die auf die Gasblase 15 wirkende Auftriebskraft innerhalb der Schmelzezone 10 eigentlich weg von der Fügeebene FE gerichtet ist. Insoweit kann - wie nicht näher dargestellt ist - es von Vorteil sein, einen an sich aus der eingangs genannten Veröffentlichung von Cvecek et al. grundsätzlich bekannten Mitführungseffekt für die Gasblasen 15 mit Vorteil für das erfindungsgemäße Fügeverfahren anzuwenden. Es hat sich nämlich gezeigt, dass durch die Bewegung des die Gasblasen 15 erzeugenden Fokus 17 des Bearbeitungsstrahls 14 (oder direkt des Fokus 9 des Bearbeitungsstrahls 2) eine in der jeweiligen Schmelzezone 10 entwickelte Gasblase 15 transportiert werden kann.

Der Grund hierfür ist anhand von Fig. 2 zum besseren Verständnis der Erfindung kurz zu erläutern. Wie dort gezeigt ist, ist bei der Bestrahlung des glasartigen Fügepartners 5 durch Ultrakurzpuls-Laser die Oberflächenspannung über die Gasblase 15 nicht im Gleichgewicht. Die Oberflächenspannung ist gemäß der Eötvös-Regel in der Richtung der Bewegung B des Fokus 17 des Bearbeitungsstrahls 14 aufgrund der näher am Fokus bzw. der entsprechenden Plasma-Region höheren Temperatur niedriger. In umgekehrter Richtung erhöht sich dort, wo sich das umgebende Material abkühlt, die Oberflächenspannung. Die höhere Oberflächenspannung am "kalten Ende" der Gasblase 15 drückt so die Gasblase in Richtung der Bewegung des Fokus 17 des Lasers, da die Oberflächenspannung am "heißen Ende" der Gasblase innerhalb des Fokus 17 niedriger ist und daher keinen genügend hohen Gegendruck aufbauen kann. Dies resultiert in einer effektiven Bewegung G in Richtung der Bewegung B des Laserfokus 17. Dieser Mechanismus wird unterbrochen, wenn aufgrund eines zu großen Wachstums der Gasblase die laserinduzierte Ionisation und Aufheizung aufgrund der Streuung der Laserstrahlung an der Gasblase zu gering wird.

Fig. 3 zeigt in diesem Zusammenhang eine einer realen Mikroskopfotografie nachempfundene Darstellung einer Gasblase, die in Quarzglas mithilfe eines entsprechenden Laser-Bearbeitungsstrahls 2 oder 14 bearbeitet wurde. Der Pfeil R gibt dabei die Einstrahlungsrichtung des Laserstrahls wieder. Der Pfeil M die Bewegungsrichtung des Laserstrahls, entlang derer die Gasblase 15 stark verzerrt ist. Dieser Effekt würde dann auch in der Konfiguration gemäß Fig. 4 zu einer über die Auftriebskraft hinaus zusätzlichen Unterstützung der Aufwölbungen 12 durch die Gasblasen 15 führen. Aufgrund der Vergrößerung des Schmelzevolumens durch die Gasblasen 15 ist es sogar möglich, eine damit verbundene effektive Vergrößerung der Aufwölbung der NVZ 11 auch dann zu bewirken, wenn die Gasblasen 15 sich nicht in unmittelbarer Nähe des anderen Fügepartners 6 aufhalten. Entscheidend ist lediglich, dass diese sich in der Schmelzezone 10 befinden.

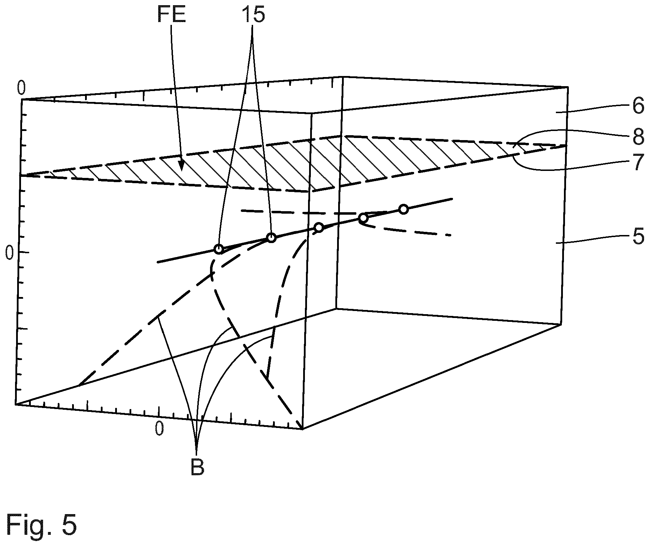

Anhand von Fig. 5 ist noch der spezielle Mechanismus der gezielten Führung von Gasblasen 15 aus dem Material des unten dargestellten, glasartigen Fügepartners 5 aus dem Material außerhalb der Schmelzezone in die Schmelzezone 10 zu erläutern, um deren Volumen zu vergrößern und dadurch eine größere Aufwölbung der NVZ 11 zu erreichen. Die durchgezogene Linie innerhalb des Volumens des Fügepartners 5 gibt die durch eine einfache Überfahrt mit dem ersten Laser-Bearbeitungsstrahl 2 hervorgerufene Schmelzezone 10 wieder. Gestrichelt sind aus verschiedenen Raumrichtungen von unten, rechts, links die Bahnen der Bewegung B angedeutet, die der Fokus 17 des zweiten Bearbeitungsstrahls 14 vollführt, dabei im glasartigen Fügepartner 5 Gasblasen 15 erzeugt und zur Schmelzezone 10 hin transportiert. Die entsprechenden, punktartigen Verdickungen auf der schwarzen durchgezogenen Linie stellen dann auch die entsprechenden, zusätzlich in die Schmelzezone 10 eingebrachten Gasblasen 15 dar.

Die Führung der Gasblasen kann dabei durch eine gezielte Parameterwahl der Laser erfolgen, so dass nach bestimmter Verfahrstrecke die Gasblase 15 aufgrund des Reibungswiderstandes nicht mehr durch diesen Mitführungseffekt transportiert werden kann und am gewünschten Ort innerhalb der Schmelzezone stecken bleibt. Mithilfe der oben erwähnten Steuerung der dreidimensionalen Intensitätsverteilung im Laserfokus 17 durch steuerbare oder nicht steuerbare, strahlformende Aufbauten, wie einen "spatial light modulator" oder eine adaptive Optik kann die Stärke des Mitführungseffektes gezielt beeinflusst werden. So kann durch einen sphärischen Fokus eine hohe Mitführungsstärke, durch einen abgeplatteten Fokus oder ein großes Fokusvolumen eine geringe Mitführungsstärke und durch einen longitudinalen Fokus beispielsweise ein Mitführungseffekt mit einem verstärkten Auftriebseffekt erzielt werden. Diese gezielte dreidimensionale Fokusführung erlaubt also eine gezielte Kombination von Auftrieb- und Mitführungseffekt, um eine gesteuerte Ablösung der Gasblasen an einer gewünschten Stelle innerhalb des glasartigen Partners zu erlauben.

Wie in den Figuren nicht näher dargestellt ist, können der oder die UKP-Laser 1, 16 beispielsweise durch Mikrolinsenarrays, spatial light modulators oder akustooptische Deflektoren in mehrere Teilstrahlen aufgespaltet werden, um an verschiedenen Stellen des glasartigen Fügepartners 5 Schmelzezonen 10 mit Gasblasen 15 parallel zu erzeugen. Damit können die Fügepartner 5, 6 mittels mehrerer gasblasenunterstützter NVZ 11 gleichzeitig gefügt werden.

Bei Verwendung eines gepulsten Lasers im fs-Bereich kann die Schmelzezone 10 in der Tiefe des dispersiven Materials durch eine geeignete Pulsdispersion, einen sogenannten "Chirp" eingestellt werden, indem ein Pulsformer, beispielsweise ein SLM im Fourieraufbau benutzt werden, so dass der Puls-Chirp erst nach Durchqueren der gewünschten Strecke im Material seine kürzeste Pulsdauer erhält. Erst dann wird das Material des Fügepartners 5 nicht linear aufgeheizt.

Anzumerken ist auch, dass bei einem Vorschub der Schmelzezone 10 im glasartigen Fügepartner 5 der Laser am Anfang und Ende der Schweißung nicht schlagartig auf einen festen Wert erhöht bzw. ausgeschaltet, sondern monoton oder schrittweise erhöht. bzw. verringert wird. Dies dient der Vermeidung von Rissen am Anfang und Ende der Schweißnaht.

## Patentansprüche

1. Verfahren zum laserinduzierten Fügen eines ersten, glasartigen Fügepartners mit einem zweiten Fügepartner mithilfe ultrakurzer Laserpulse, umfassend folgende Verfahrensschritte:
- Positionieren der beiden Fügepartner (5, 6) mit einem durch die Oberflächenrauheit der Fügepartner (5, 6) bedingten Spalt (S) zwischen ihren zu fügenden Oberflächen (7, 8) in einer Fügeebene (FE),
- Einstrahlen eines fokussierten Bearbeitungsstrahls (2, 14) eines Ultrakurzpuls-Lasers (1, 16) in den glasartigen Fügepartner (5) mit dem Fokus (9) nahe der Fügeebene (FE) unter Bildung einer Schmelzezone (10) und einer diese umgebenden niedrigviskosen Zone (11) um den Fokus (9) des Bearbeitungsstrahls (2, 14) im glasartigen Fügepartner (5) aufgrund laserinduzierter Ionisationseffekte derart, dass die räumliche Ausdehnung der niedrigviskosen Zone (11) aufgrund von Wärmeleitung bis an die Oberfläche (7) des glasartigen Fügepartners (5) reicht und die thermische Ausdehnung der Schmelzezone (10) ein Aufwölben (12) der Oberfläche (7) des glasartigen Fügepartners (5) im Bereich des Fokus (9, 17) des Bearbeitungsstrahles (2, 14) unter Reduzierung des Spaltes (S) zum zweiten Fügepartner (8) hin auf ein Maß (S) zur Erzielung eines optischen Kontaktes der Fügepartner (5, 6) in einer dadurch gebildeten Fügezone (13) verursacht, und
- Anhaften der Fügepartner (5, 6) in der Fügezone (13) aufgrund der im Bereich der Fügezone (13) wirkenden Van-der-Waals-Kräfte zwischen den Fügepartnern (5, 6),
**dadurch gekennzeichnet, dass**
- ein fokussierter Ultrakurzpuls-Laserstrahl (2, 14) in die Schmelzezone (10) eingestrahlt wird, dessen Bestrahlungsparameter so gewählt sind, dass aufgrund der die Schmelzezone (10) erzeugenden, laserinduzierten Ionisationseffekte zusätzlich in der Schmelzezone (10) Gasblasen (15) erzeugt werden, deren Volumenvergrößerung die Aufwölbung (12) der Oberfläche (7) des glasartigen Fügepartners (5) und die damit verbundene Reduzierung des Spaltes (S) zwischen den Fügepartnern (5, 6) unterstützt, und
- durch den fokussierten Ultrakurzpuls-Laserstrahl (2, 14) im glasartigen Fügepartner (5) erzeugte Gasblasen (15) durch eine Vorschubbewegung des Fokus (9, 17) des Ultrakurzpuls-Laserstrahls (2, 14) innerhalb des glasartigen Fügepartners (5) mit Hilfe eines laserbasierten, durch die Oberflächenspannung der Gasblase (15) bedingten Mitführungseffektes in die Schmelzezone (10) transportiert werden.

2. Verfahren nach Anspruch 1, **dadurch gekennzeichnet, dass** der die Gasblasenbildung hervorrufende Ultrakurzpuls-Laserstrahl durch den fokussierten Bearbeitungsstrahls (2) selbst gebildet wird.

3. Verfahren nach Anspruch 1, **dadurch gekennzeichnet, dass** der die Gasblasenbildung hervorrufende Ultrakurzpuls-Laserstrahl ein gesonderter, vom fokussierten Bearbeitungsstrahl (2) unabhängiger Ultrakurzpuls-Laserstrahl ist (14).

4. Verfahren nach einem der vorgenannten Ansprüche, **dadurch gekennzeichnet, dass** die Fügepartner (5, 6) mit ihrer Fügezone (13) derart angeordnet werden, dass die auf jede Gasblase (15) in der Schmelzezone (10) wirkende Auftriebskraft in Richtung der Fügezone (13) gerichtet ist.

5. Verfahren nach einem der vorgenannten Ansprüche, **dadurch gekennzeichnet, dass** der Mitführungseffekt auf die Gasblasen (15), insbesondere das Ablösen der Gasblase (15) vom führenden Ultrakurzpuls-Laserstrahl (2, 14), durch die Laserparameter, insbesondere Laserleistung, Pulsenergie, Vorschubgeschwindigkeit, Pulsdauer und Repetitionsrate, des Ultrakurzpuls-Laserstrahls (2, 14) gesteuert wird.

6. Verfahren nach einem der vorgenannten Ansprüche, **dadurch gekennzeichnet, dass** der um die jeweilige Fügezone (13) verbleibende Spalt (S) durch Transportieren der in der erstarrten Schmelzezone (10) lokalisierten Gasblase(n) (15) in von der Fügeebene (13) abgewandter Richtung (G) mit Hilfe des laserbasierten, durch die Oberflächenspannung der Gasblase (15) bedingten Mitführungseffektes verkleinert wird.

7. Verfahren nach einem der vorgenannten Ansprüche, **dadurch gekennzeichnet, dass** gleichzeitig mehrere Ultrakurzpuls-Laserstrahlen (2, 14) zum gezielten Transport einer Gasblase (15) insbesondere entgegen deren Auftriebskraft innerhalb einer Schmelzezone (10) verwendet werden.

8. Verfahren nach einem der vorgenannten Ansprüche, **dadurch gekennzeichnet, dass** insbesondere zur Herstellung von punktförmigen Fügezonen (13) zwischen den beiden Fügepartnern (5, 6) eine Gasblase (15) innerhalb des glasartigen Fügepartners (5) erzeugt und mit Hilfe des laserbasierten, durch die Oberflächenspannung der Gasblase (15) bedingten Mitführungseffektes zum Ort der zu erstellenden punktförmigen Fügezone (13) transportiert wird.

9. Verfahren nach einem der vorgenannten Ansprüche, **dadurch gekennzeichnet, dass** der Fokus des Bearbeitungsstrahls (2, 14) des Ultrakurzpuls-Lasers (1, 16) zur gezielten Führung der Gasblase(n) (15) durch Strahlformungsmittel (18) geformt wird.

10. Verfahren nach Anspruch 9, **dadurch gekennzeichnet, dass** als Strahlformungsmittel (18) zur Steuerung der dreidimensionalen Intensitätsverteilung im Fokus (9, 17) eine adaptive Optik und/oder ein räumlicher Licht-Modulator derart verwendet werden, dass der Fokus (9, 17) insbesondere sphärisch, abgeplattet ist oder longitudinal gedehnt ist.

11. Verfahren nach einem der vorgenannten Ansprüche, **dadurch gekennzeichnet, dass** der glasartige Fügepartner (5) aus Quarz-, Kalk-Natron-oder Borosilikat-Glas besteht.

12. Verfahren nach einem der vorgenannten Ansprüche, **dadurch gekennzeichnet, dass** der zweite Fügepartner (6) aus Metall, einem Halbleiter, einem Kristall oder Kunststoff besteht, der folgende Eigenschaften aufweist:
- der Kontaktwinkel der niedrigviskosen Zone (11) zum zweiten Fügepartners (6) ist kleiner 90°, und
- der Schmelzpunkt des zweiten Fügepartners (6) liegt über der Minimal-Temperatur der niedrigviskosen Zone (11), die notwendig ist eine Aufwölbung der Oberfläche (7) des glasartigen Fügepartners (5) während des Fügeprozesses zu bewirken.

13. Verfahren nach einem der vorgenannten Ansprüche, **gekennzeichnet durch** folgende typische Spezifikationen für die Laser-Bearbeitungsstrahlen (2, 14) bzw. die Fokussieroptik (4):
- Pulsenergie in der Größenordnung von 0,7 bis 5 µJ, vorzugsweise 2 µJ,
- Wiederholrate von 100 bis 4 MHz, vorzugsweise 1 MHz
- Vorschubgeschwindigkeit von 10 mm/s,
- numerische Apertur der Fokussieroptik (4) von 0,3 bis 0,9, vorzugsweise 0,8.

## Claims

1. A method for the laser-induced joining of a first, vitreous joining partner with a second joining partner using ultrashort laser pulses, comprising the following method steps:
- positioning the two joining partners (5, 6) with a gap (S), caused by the surface roughness of the joining partners (5, 6), between their surfaces (7, 8) to be joined in a joining plane (FE),
- radiating a focused processing beam (2, 14) of an ultrashort pulse laser (1, 16) into the vitreous joining partner (5) with the focus (9) near the joining plane (FE) while forming a melt zone (10) and a low-viscosity zone (11) surrounding same around the focus (9) of the processing beam (2, 14) in the vitreous joining partner (5) due to laser-induced ionization effects such that the spatial expansion of the low-viscosity zone (11) extends to the surface (7) of the vitreous joining partner (5) due to heat conduction, and the thermal expansion of the melt zone (10) causes the surface (7) of the vitreous joining partner (5) to bulge (12) in the region of the focus (9, 17) of the processing beam (2, 14) while reducing the gap (S) towards the second joining partner (8) to a dimension (S) for achieving an optical contact of the joining partners (5, 6) in a joining zone (13) formed thereby, and
- adhering the joining partners (5, 6) in the joining zone (13) due to the Van der Waals forces acting between the joining partners (5, 6) in the region of the joining zone (13),
**characterized in that**
- a focused ultrashort-pulse laser beam (2, 14) is radiated into the melt zone (10), the irradiation parameters of which are selected such that gas bubbles (15) are additionally generated in the melt zone (10) due to the laser-induced ionization effects generating the melt zone (10), the increase in volume of which supports the bulging (12) of the surface (7) of the vitreous joining partner (5) and the associated reduction of the gap (S) between the joining partners (5, 6), and
- gas bubbles (15) generated by the focused ultrashort-pulse laser beam (2, 14) in the vitreous joining partner (5) are transported into the melt zone (10) by an advancing movement of the focus (9, 17) of the ultrashort-pulse laser beam (2, 14) within the vitreous joining partner (5) with the aid of a laser-based entrainment effect caused by the surface tension of the gas bubble (15).

2. A method according to claim 1, **characterized in that** the ultrashort pulse laser beam causing the gas bubble formation is formed by the focused processing beam (2) itself.

3. A method according to claim 1, **characterized in that** the ultrashort pulse laser beam causing the gas bubble formation is a separate ultrashort pulse laser beam (14) independent of the focused processing beam (2).

4. A method according to any one of the preceding claims, **characterized in that** the joining partners (5, 6) are arranged with their joining zone (13) in such a way that the buoyancy force acting on each gas bubble (15) in the melt zone (10) points in the direction of the joining zone (13).

5. A method according to any one of the preceding claims, **characterized in that** the entrainment effect on the gas bubbles (15), in particular the detachment of the gas bubble (15) from the guiding ultrashort pulse laser beam (2, 14), is controlled by the laser parameters, in particular laser power, pulse energy, feed rate, pulse duration and repetition rate, of the ultrashort pulse laser beam (2, 14).

6. A method according to any one of the preceding claims, **characterized in that** the gap (S) remaining around the respective joining zone (13) is reduced by transporting the gas bubble(s) (15) localized in the solidified melt zone (10) in the direction (G) facing away from the joining plane (13) with the aid of the laser-based entrainment effect caused by the surface tension of the gas bubble (15).

7. A method according to any one of the preceding claims, **characterized in that** a plurality of ultrashort-pulse laser beams (2, 14) are used simultaneously for the targeted transport of a gas bubble (15), in particular against its buoyancy force, within a melt zone (10).

8. A method according to any one of the preceding claims, **characterized in that**, in particular for producing point-shaped joining zones (13) between the two joining partners (5, 6), a gas bubble (15) is generated within the vitreous joining partner (5) and is transported to the location of the point-shaped joining zone (13) to be produced with the aid of the laser-based entrainment effect caused by the surface tension of the gas bubble (15).

9. A method according to any one of the preceding claims, **characterized in that** the focus of the processing beam (2, 14) of the ultrashort pulse laser (1, 16) is shaped by beam shaping means (18) for selectively guiding the gas bubble(s) (15).

10. A method according to claim 9, **characterized in that** adaptive optics and/or a spatial light modulator are used as beam shaping means (18) for controlling the three-dimensional intensity distribution in the focus (9, 17) in such a way that the focus (9, 17) is in particular spherical, flattened or longitudinally stretched.

11. A method according to any one of the preceding claims, **characterized in that** the vitreous joining partner (5) consists of quartz, soda-lime or borosilicate glass.

12. A method according to any one of the preceding claims, **characterized in that** the second joining partner (6) is made of metal, a semiconductor, a crystal or plastic material having the following properties:
- the contact angle of the low-viscosity zone (11) to the second joining partner (6) is less than 90°, and
- the melting point of the second joining partner (6) is above the minimum temperature of the low-viscosity zone (11) which is necessary to cause a bulging of the surface (7) of the vitreous joining partner (5) during the joining process.

13. A method according to any one of the preceding claims, **characterized by** the following typical specifications for the laser processing beams (2, 14) and the focusing optics (4), respectively:
- pulse energy in the order of 0.7 to 5 µJ, preferably 2 µJ,
- repetition rate of 100 to 4 MHz, preferably 1 MHz
- feed rate of 10 mm/s,
- numerical aperture of the focusing optics (4) of 0.3 to 0.9, preferably 0.8.

## Revendications

1. Procédé d'assemblage induit par laser d'une partie en verre à assembler à une deuxième partie à assembler à l'aide d'impulsion laser ultracourte, comprenant les étapes de procédé suivantes :
- positionnement des deux parties à assembler (5, 6) avec un espace (S) provoqué par la rugosité de surface des parties à assembler (5, 6) entre leurs surfaces (7, 8) à assembler dans un plan d'assemblage (FE),
- rayonnement d'un faisceau de traitement focalisé (2, 14) d'un laser à impulsion ultracourte (1, 16) dans la partie en verre à assembler (5) avec le foyer (9) à proximité du plan d'assemblage (FE) sous formation d'une zone de fusion (10) et d'une zone à faible viscosité (11) entourant le foyer (9) du faisceau de traitement (2, 14) dans la partie en verre à assembler (5) en raison d'effets d'ionisation induits par le laser de telle sorte que l'expansion spatiale de la zone à faible viscosité (11) atteigne la surface (7) de la partie en verre à assembler (5) à cause de conduction thermique et que l'expansion thermique de la zone de fusion (10) provoque un bombement (12) de la surface (7) de la partie en verre à assembler (5) dans la région du foyer (9, 14) du faisceau de traitement (2, 14), 17) du faisceau de traitement (2, 14) sous réduction de l'espace (S) vers la deuxième partie à assembler (8) à une dimension (S) pour obtenir un contact optique des parties à assembler (5, 6) dans une zone d'assemblage (13) ainsi formée, et
- adhésion des parties à assembler (5, 6) dans la zone d'assemblage (13) en raison des forces de Van der Waals agissant entre les parties à assembler (5, 6) dans la région de la zone d'assemblage (13),
**caractérisé en ce**
- **qu**'un faisceau laser focalisé à impulsion ultracourte (2, 14) est irradié dans la zone de fusion (10), dont les paramètres d'irradiation sont choisis de telle sorte que des bulles de gaz (15) sont générées en plus dans la zone de fusion (10) en raison des effets d'ionisation induits par le laser générant la zone de fusion (10), dont l'augmentation de volume favorise le bombement (12) de la surface (7) de la partie en verre à assembler (5) et la réduction associée de l'espace (S) entre les parties à assembler (5, 6), et
- **que** des bulles de gaz (15) générées par le faisceau laser focalisé à impulsion ultracourte (2, 14) dans la partie en verre à assembler (5) sont transportées dans la zone de fusion (10) par un mouvement d'avance du foyer (9, 17) du faisceau laser à impulsion ultracourte (2, 14) à l'intérieur de la partie en verre à assembler (5) à l'aide d'un effet d'entraînement basé sur le laser et provoqué par la tension superficielle de la bulle de gaz (15).

2. Procédé selon la revendication 1, **caractérisé en ce que** le faisceau laser à impulsion ultracourte, provoquant la formation de bulles de gaz, est formé par le faisceau de traitement focalisé (2) lui-même.

3. Procédé selon la revendication 1, **caractérisé en ce que** le faisceau laser à impulsion ultracourte provoquant la formation de bulles de gaz est un faisceau laser à impulsion ultracourte (14) séparé, indépendant du faisceau de traitement focalisé (2).

4. Procédé selon l'une quelconque des revendications précédentes, **caractérisé en ce que** les parties à assembler (5, 6) sont disposées avec leur zone d'assemblage (13) de telle sorte que la force de flottaison agissant sur chaque bulle de gaz (15) dans la zone de fusion (10) est dirigée en direction de la zone d'assemblage (13).

5. Procédé selon l'une quelconque des revendications précédentes, **caractérisé en ce que** l'effet d'entraînement sur les bulles de gaz (15), en particulier le détachement de la bulle de gaz (15) du faisceau laser à impulsion ultracourte (2, 14), est contrôlé par les paramètres laser, en particulier la puissance laser, l'énergie d'impulsion, la vitesse d'avance, la durée d'impulsion et la fréquence de répétition, du faisceau laser à impulsion ultracourte (2, 14).

6. Procédé selon l'une quelconque des revendications précédentes, **caractérisé en ce que** l'espace (S) restant autour de la zone d'assemblage (13) respective est réduit par le transport de la ou des bulle(s) de gaz (15) localisée(s) dans la zone de fusion (10) solidifiée dans la direction (G) opposée au plan d'assemblage (13), à l'aide de l'effet d'entraînement basé sur le laser et provoqué par la tension superficielle de la bulle de gaz (15).

7. Procédé selon l'une quelconque des revendications précédentes, **caractérisé en ce que** plusieurs faisceaux laser à impulsions ultracourtes (2, 14) sont utilisés simultanément pour le transport ciblé d'une bulle de gaz (15), en particulier contre sa force de flottaison, à l'intérieur d'une zone de fusion (10).

8. Procédé selon l'une quelconque des revendications précédentes, **caractérisé en ce que,** en particulier pour la réalisation de zones d'assemblage (13) ponctuelles entre les deux parties à assembler (5, 6), une bulle de gaz (15) est produite à l'intérieur de la partie en verre à assembler (5) et transportée à l'endroit de la zone d'assemblage (13) ponctuelle à réaliser à l'aide de l'effet d'entraînement basé sur le laser et provoqué par la tension superficielle de la bulle de gaz (15).

9. Procédé selon l'une quelconque des revendications précédentes, **caractérisé en ce que** le foyer du faisceau de traitement (2, 14) du laser à impulsion ultracourte (1, 16) est formé par des moyens de mise en forme de faisceau (18) pour le guidage ciblé de la ou des bulle(s) de gaz (15).

10. Procédé selon la revendication 9, **caractérisé en ce qu'**une optique adaptative et/ou un modulateur spatial de lumière sont utilisés comme moyens de mise en forme du faisceau (18) pour commander la distribution tridimensionnelle de l'intensité dans le foyer (9, 17) de telle sorte que le foyer (9, 17) soit en particulier sphérique, aplati ou étiré longitudinalement.

11. Procédé selon l'une quelconque des revendications précédentes, **caractérisé en ce que** la partie en verre à assembler (5) est constituée de verre de quartz, de verre sodocalcique ou de verre borosilicaté.

12. Procédé selon l'une quelconque des revendications précédentes, **caractérisé en ce que** la deuxième partie à assembler (6) est constituée d'un métal, d'un semi-conducteur, d'un cristal ou d'une matière plastique qui présente les propriétés suivantes :
- l'angle de contact de la zone à faible viscosité (11) avec la deuxième partie à assembler (6) est inférieur à 90°, et
- le point de fusion de la deuxième partie à assembler (6) est supérieur à la température minimale de la zone à faible viscosité (11) qui est nécessaire pour provoquer un bombement de la surface (7) de la partie en verre à assembler (5) pendant le processus d'assemblage.

13. Procédé selon l'une quelconque des revendications précédentes, **caractérisé par** les spécifications typiques suivantes pour les faisceaux de traitement laser (2, 14) ou l'optique de focalisation (4) :
- énergie d'impulsion de l'ordre de 0,7 à 5 µJ, de préférence 2 µJ,
- fréquence de répétition de 100 à 4 MHz, de préférence 1 MHz
- vitesse d'avance de 10 mm/s,
- ouverture numérique de l'optique de focalisation (4) de 0,3 à 0,9, de préférence 0,8.
